Europäisches Patentamt

European Patent Office

Office européen des brevets

(19)

(11) Numéro de publication: **0 233 421**
**B1**

(12) **FASCICULE DE BREVET EUROPEEN**

(45) Date de publication du fascicule du brevet:
28.02.90

(51) Int. Cl.⁴: **G05B 19/35**

(21) Numéro de dépôt: 86402723.0

(22) Date de dépôt: 09.12.86

(54) **Dispositif de réglage de la position d'au moins une partie des éléments d'un siège, notamment de véhicule automobile.**

(30) Priorité: **13.01.86 FR 8600377**

(43) Date de publication de la demande:
**26.08.87 Bulletin 87/35**

(45) Mention de la délivrance du brevet:
**28.02.90 Bulletin 90/9**

(84) Etats contractants désignés:
**DE ES GB IT**

(56) Documents cités:
**EP-A- 0 030 925**

(73) Titulaire: **ECIA - EQUIPEMENTS ET COMPOSANTS POUR L'INDUSTRIE AUTOMOBILE, F-25400 Audincourt (Doubs)(FR)**

(72) Inventeur: **Rudi, Alain, 2 Rue Collin, Essert 90000 Belfort(FR)**

(74) Mandataire: **Polus, Camille et al, c/o Cabinet Lavoix 2, Place d'Estienne d'Orves, F-75441 Paris Cedex 09(FR)**

**Description**

La présente invention concerne un dispositif de réglage de la position d'au moins une partie des éléments d'un siège, notamment de véhicule automobile, du type comportant des moyens de choix et des moyens de mémorisation de la position désirée de chaque élément par un utilisateur, des moyens de détection de la position réelle de chaque élément, des moyens de comparaison desdites positions désirée et réelle, reliés à des moyens de commande de moyens d'actionnement servant à déplacer chaque élément vers la position désirée.

On connait dans l'état de la technique, un certain nombre de dispositifs de réglage de siège d'un véhicule automobile, permettant à un utilisateur d'adapter celui-ci à sa morphologie pour avoir une bonne position de conduite, dans le cas du conducteur et un maximum de confort, pour tous les utilisateurs.

Ainsi par exemple, on connait des dispositifs comportant des moyens de choix de la hauteur d'assise à l'avant et à l'arrière du coussin d'un siège avant d'un véhicule, des moyens de choix de l'inclinaison du dossier et des moyens de choix de la position longitudinale du siège.

Par ailleurs, il existe également des dispositifs comportant des moyens de choix de la hauteur de l'appui-tête.

Les réglages manuels de ces différents moyens de choix du positionnement des éléments du siège deviennent relativement fastidieux dès qu'ils dépassent le nombre de deux.

Ces réglages sont acceptables quel qu'en soit le nombre si c'est toujours la même personne qui occupe la même place du véhicule. Par contre, si plusieurs personnes de morphologie différente se succèdent à une même place, il devient relativement gênant de faire, à chaque fois qu'un utilisateur différent s'asseoit sur le siège considéré, les gestes pour obtenir les quatre ou cinq réglages mentionnés précédemment.

C'est pourquoi, certains dispositifs comportent des moyens électriques de choix de la position des différents éléments du siège en utilisant des moto-réducteurs à courant continu en général à inducteur à aimants permanents, alimentés par le réseau de bord du véhicule.

Dans ces dispositifs, l'utilisateur agit sur quatre ou cinq boutons de manœuvre, chacun de ceux-ci étant du type inverseur et commandant le sens de rotation d'un moto-réducteur afin d'amener l'élément de siège correspondant vers la position désirée. Certains dispositifs comportent également des moyens de mémorisation permettant de mémoriser pour chaque utilisateur différents réglages du siège du véhicule, les différents réglages de celui-ci étant adaptés à la morphologie de l'utilisateur.

Cependant, ces dispositifs présentent un certain nombre d'inconvénients. En effet, ces dispositifs sont relativement complexes, comportent des circuits de mémorisation, fonctionnent en numérique et sont donc d'un prix de revient relativement élevé.

On connaît également d'après le document EP-A 0 030 925 un dispositif de réglage de la position de conduite dans un véhicule automobile. Ce dispositif comprend:

– des moyens d'actionnement, constitués par exemple par un moteur électrique, pouvant être reliés à une source électrique pour entraîner un déplacement de chaque élément réglable,

– des moyens de détection pour détecter la position de chaque élément réglable par rapport à un élément de référence,

– des moyens de commande électrique reliés auxdits moyens de détection et destinés à commander l'ouverture ou la fermeture de la connexion entre lesdits moyens d'actionnement et la source électrique,

– une clé électrique codée agencée pour coopérer avec lesdits moyens de commande électrique pour entraîner la fermeture de la connexion entre lesdits moyens d'actionnement et la source électrique de manière à déterminer le déplacement de chaque élément réglable.

– lesdits moyens de commande électrique étant adaptés pour interrompre ladite connexion lorsque les moyens de détection détectent l'arrivée de l'élément réglable dans une position prédéterminée, en fonction du code de la clé électrique codée.

Cependant, ce dispositif présente un certain nombre d'inconvénients notamment au niveau de sa structure qui est relativement complexe et de son prix de revient.

Par ailleurs, on connaît également dans l'état de la technique, des dispositifs pour lesquels les moyens de mémorisation d'un choix quelconque, sont constitués par les moyens de détermination de ce choix, comme c'est le cas par exemple pour certains récepteurs de radio dans lesquels il est possible pour l'utilisateur de pré-régler un certain nombre de stations.

Le but de l'invention est de résoudre les problèmes évoqués ci-dessus en proposant un dispositif de réglage qui soit simple, fiable et d'un prix de revient relativement faible.

A cet effet, l'invention a pour objet un dispositif de réglage de la position d'au moins une partie des éléments d'un siège, notamment de véhicule automobile, du type comportant pour chaque élément à régler un moyen de choix de la position désirée par un utilisateur, un moyen de mémorisation de la position choisie, un moyen pour détecter la position réelle de l'élément, un moyen de comparaison desdites positions désirées et réelles relié à des moyens de commande de moyens d'actionnement servant à déplacer ledit élément vers la position désirée, caractérisé en ce que, pour chaque élément à régler, le moyen de choix comporte un ensemble de N potentiomètres dont les curseurs sont montés déplaçables par les utilisateurs, le nombre N étant choisi égal à un nombre prédéterminé d'utilisateurs de morphologie différente, ce nombre étant supérieur à 1, en ce que, pour chaque élément à régler, le moyen de mémorisation est constitué par l'ensemble correspondant de potentiomètres formant le moyen de choix dudit élément, en ce qu'il est prévu des moyens de sélection pour relier le curseur d'un potentiomètre donné de chaque ensemble avec le moyen de comparaison associé au même élément que cet ensemble, chaque moyen de comparaison commandant les moyens d'actionnement de son élément associé en fonction du résultat de la comparaison entre les signaux de sortie du curseur et du moyen de détection de la position réelle associé avec le même élément.

L'invention sera mieux comprise à l'aide de la description qui va suivre, donnée uniquement à titre d'exemple et faite en se référant aux dessins annexés, sur lesquels:

– la Fig. 1 illustre les différentes possibilités de réglage d'un siège de véhicule automobile;

– la Fig. 2 représente un schéma électrique d'un dispositif de réglage selon l'invention; et

– la Fig. 3 représente un boîtier de commande entrant dans la constitution d'un dispositif de réglage selon l'invention.

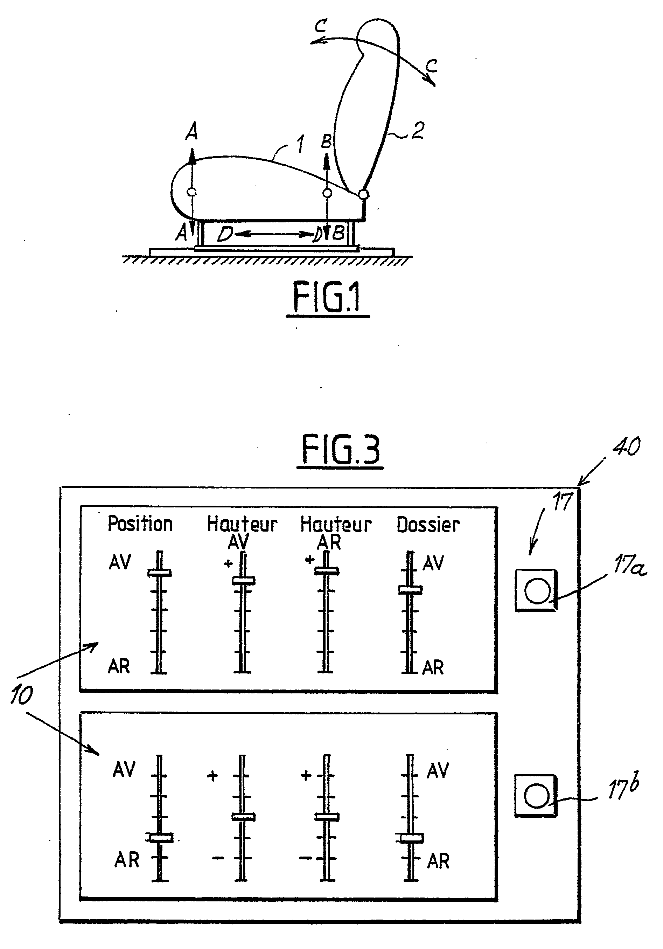

Ainsi qu'on peut le voir sur la Fig. 1, un siège de véhicule automobile comporte un coussin 1, un dossier 2 et éventuellement un appui-tête (non représenté). Les différentes possibilités de réglage de ce siège, pour l'adapter à la morphologie d'un utilisateur, consistent en un choix de la hauteur d'assise à l'avant du coussin suivant la ligne A–A sur cette Fig., un choix de la hauteur d'assise à l'arrière du coussin suivant la ligne B–B, un choix de l'inclinaison du dossier suivant la ligne C–C et un choix de la position longitudinale suivant la ligne D–D. Ces différents réglages sont assurés par l'intermédiaire par exemple de moto-réducteurs connus à courant continu et à double sens de rotation alimentés par le réseau de bord du véhicule.

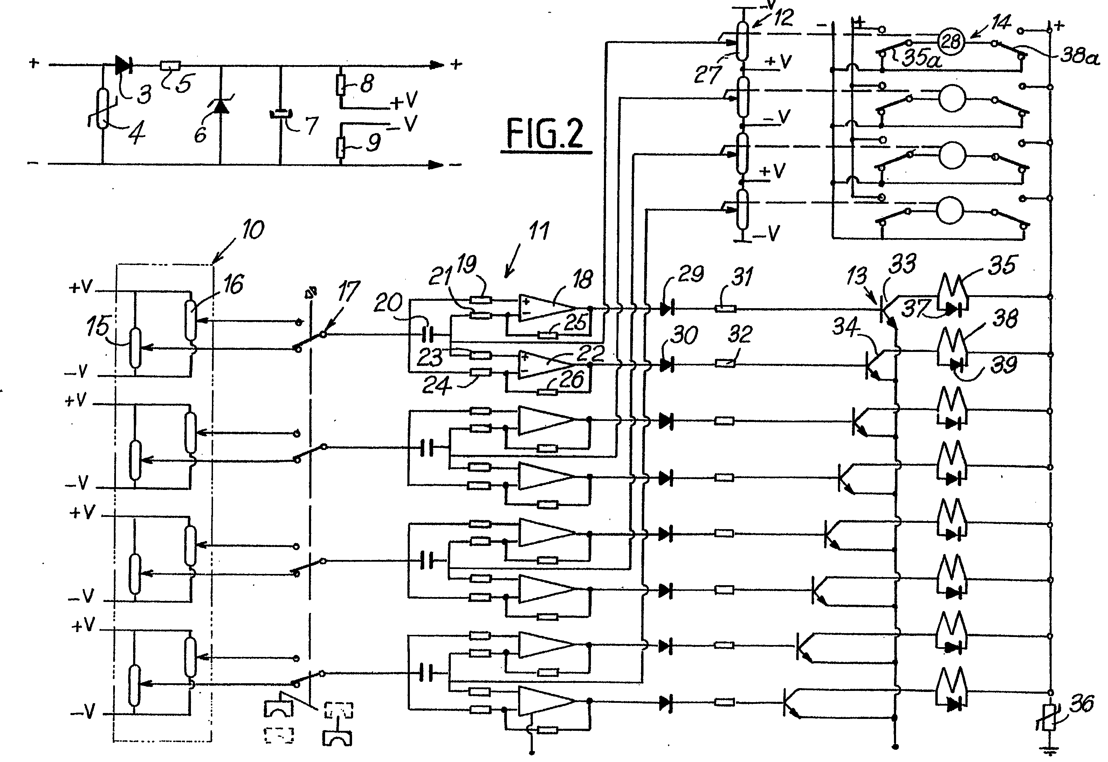

La commande de ces différents moto-réducteurs de réglage de la position des éléments du siège est réalisée par l'intermédiaire du circuit représenté sur la Fig. 2.

La partie de description qui va suivre se rapporte à un dispositif de réglage permettant à deux utilisateurs A et B d'effectuer les quatre réglages mentionnés précédemment. Il va de soi que ces chiffres sont donnés à titre d'exemple pour des raisons de simplification et non pas à titre limitatif.

L'alimentation du circuit représenté sur cette Fig. 1, est réalisée à partir du réseau de bord du véhicule dont la borne positive est reliée d'une part à l'anode d'une diode 3 et d'autre part à une borne d'une varistance 4 dont l'autre borne est reliée à la borne négative dudit réseau. La cathode de la diode 3 est reliée à une borne d'une résistance 5 dont l'autre borne est reliée à la cathode d'une diode Zener 6, à une borne d'un condensateur 7 et à une borne d'une résistance 8. L'anode de la diode Zener 6 et l'autre borne du condensateur 7 sont reliées à la borne négative du réseau d'alimentation. Une borne d'une résistance 9 est également reliée à cette borne négative du réseau d'alimentation. L'autre borne négative du réseau d'alimentation. L'autre borne de cette résistance 9 et l'autre borne de la résistance 8 délivrent respectivement des tensions –V et +V.

La partie de circuit qui vient d'être décrite constitue des moyens d'alimentation du circuit de commande des moto-réducteurs proprement dits. Ce circuit de commande comporte des moyens 10 de choix de la position désirée de chaque élément de siège, ces moyens de choix étant reliés à des moyens de comparaison 11 de la position désirée et de la position réelle dudit élément. La position réelle de chaque élément de siège est détectée par des moyens de détection 12 qui seront décrits plus en détail par la suite.

En réponse à cette comparaison, les moyens de comparaison activent des moyens de commande 13 de moyens d'actionnement 14 des éléments du siège, servant à déplacer ces éléments vers la position de réglage désirée.

Les moyens de choix de la position désirée de chaque élément de siège sont constitués par des potentiomètres dont les bornes extrêmes sont reliées aux bornes +V et –V respectivement. Ces potentiomètres sont par exemple au nombre de huit, accouplés deux à deux de manière à permettre, comme il a déjà été mentionné précédemment, à deux utilisateurs A et B de choisir et de mémoriser la position désirée de quatre parties du siège. Ainsi par exemple, les curseurs des potentiomètres 15 et 16, affectés respectivement aux utilisateurs A et B, sont reliés à deux bornes d'un commutateur 17 permettant de sélectionner lequel de ces potentiomètres 15 ou 16 est relié aux moyens de comparaison 11. Les potentiomètres constituent à la fois des moyens de choix de la position désirée des éléments du siège et des moyens de mémorisation mécanique de ce choix. En effet, lorsque l'utilisateur A s'installe par exemple pour la première fois sur un siège du véhicule, il règle le potentiomètre 15 pour adapter la partie correspondante du siège à sa morphologie et peut ensuite, comme cela sera décrit par la suite, ne plus toucher à ce potentiomètre mais rappeler cette position choisie par l'intermédiaire du commutateur 17. Pour cela, la borne commune du commutateur 17 est reliée à l'entrée non inverseuse d'un premier amplificateur opérationnel 18 à travers une résistance 19. Cette borne commune est également reliée à une borne d'un condensateur 20 dont l'autre borne est reliée à travers une résistance 21 à l'entrée inverseuse de l'amplificateur opérationnel 18. Cette autre borne du condensateur 20 est également reliée à l'entrée non inverseuse d'un second amplificateur opérationnel 22 à travers une résistance 23. La borne commune du commutateur 17 est également reliée à l'entrée inverseuse du second amplificateur opérationnel 22 à travers une résistance 24.

Les sorties des amplificateurs opérationnels 18 et 22 sont rebouclées sur leurs entrées inverseuses par des résistances 25 et 26 respectivement. La borne commune des résistances 21 et 23 et du condensateur 20 est également reliée au curseur d'un potentiomètre 27 de recopie de la position réelle de l'élément de siège dont il y a lieu de régler la position. Les bornes extrêmes de ce potentiomètre 27 sont alimentées par l'intermédiaire des bornes +V et –V mentionnées précédemment. Le curseur de ce potentiomètre est également relié mécaniquement à l'élément correspondant du siège de manière à suivre le déplacement de cet élément, ce déplacement étant commandé dans un sens ou dans l'autre par exemple par un moto-réducteur 28.

Ainsi, les moyens de comparaison 11 constitués par les deux amplificateurs opérationnels 18 et 22 comparent la position de réglage choisie, affichée et mémorisée par l'un des potentiomètres 15 ou 16 sélectionné par le commutateur 17, à la position réelle de l'élément de siège, dont une représentation est délivrée par le potentiomètre 27, pour commander la rotation du moto-réducteur correspondant par exemple 28, et donc le déplacement de l'élément de siège vers la position de réglage désirée.

A cet effet, les sorties des amplificateurs opérationnels 18 et 22 sont reliées aux anodes de diodes 29 et 30 dont les cathodes sont reliées respectivement à des résistances 31 et 32, elles-mêmes reliées aux bases de transistors NPN 33 et 34 respectivement. Les émetteurs de ces transistors sont reliés à la borne négative du réseau d'alimentation du véhicule. Le collecteur du transistor 33 est relié à une borne d'une bobine de relais 35 dont l'autre borne est reliée à la borne positive du réseau d'alimentation, elle-même reliée à la borne négative à travers une varistance 36. Une diode de protection 37 est montée en inverse aux bornes de cette bobine de relais 35. Le collecteur du transistor 34 est, quant à lui, également relié à une bobine de relais 38 aux bornes de laquelle est montée en inverse une diode de protection 39. Ces bobines de relais 35 et 38 commandent des commutateurs 35a et 38a respectivement assurant l'alimentation du moto-réducteur 28 pour que celui-ci tourne dans un sens de rotation ou dans l'autre et entraîne le déplacement dans un sens ou dans l'autre de l'élément du siège vers la position de réglage désirée.

Cette commande de l'un ou de l'autre des relais d'alimentation se fait par l'intermédiaire des amplificateurs opérationnels constituant les moyens de comparaison, qui détectent dans quel sens doit tourner le moteur et qui, lorsque la position réelle indiquée par le potentiomètre 27, est égale à la position choisie et affichée sur l'un des potentiomètres 15 ou 16, coupent l'alimentation de celui-ci.

La structure et le fonctionnement des autres parties du dispositif de commande permettant le réglage de la position des autres parties du siège, étant identiques, on ne les décrira pas en détail.

Ainsi qu'on peut le voir sur la Fig. 3, les moyens de choix et de mémorisation la position désirée de chaque élément, peuvent être disposés dans un boîtier de commande 40 fixé à proximité du siège correspondant, sur la face avant duquel sont disposés les curseurs des moyens de choix 10 de la position des éléments, et les moyens de sélection 17 de ceux-ci.

Ainsi par exemple, chaque utilisateur A ou B dispose d'un jeu de potentiomètres de choix permettant de choisir et de mémoriser les différents réglages du siège, correspondant à sa morphologie. Ces potentiomètres de choix sont reliés aux moyens de comparaison par l'intermédiaire des moyens de sélection 17 que l'utilisateur actionne lorsqu'il s'installe sur le siège. Les moyens de sélection 17 sont par exemple constitués par deux boutons poussoirs 17a, 17b à enclenchement actionnables par les utilisateurs A et B respectivement. Cette sélection a pour effet de relier les potentiomètres correspondants du jeu sélectionné par l'un des utilisateurs aux moyens de comparaison et, si les éléments du siège ne sont pas dans la position désirée, d'activer les moto-réducteurs de déplacement de ceux-ci pour les amener vers la position de choix désirée comme cela a été décrit précédemment.

Il va de soi que divers types de potentiomères peuvent être utilisés.

Par ailleurs, seule une partie des éléments d'un siège d'un véhicule automobile, peut être équipée de tels moyens de choix, l'autre partie pouvant être réglée de manière connue, par exemple manuellement ou être fixe dans le cas par exemple d'un siège arrière de véhicule.

Enfin, bien que dans la description on ait décrit un mode de réalisation pour deux utilisateurs, le dispositif peut comporter N moyens de choix et de mémorisation tels qu'ils viennent d'être décrits, correspondant aux réglages désirés pour chaque élément de siège par N utilisateurs de morphologie différente, N étant un nombre entier supérieur à 1.

## Revendications

1. Dispositif de réglage de la position d'au moins une partie des éléments d'un siège, notamment de véhicule automobile, du type comportant pour chaque élément à régler un moyen (10) de choix de la position désirée par un utilisateur, un moyen de mémorisation de la position choisie, un moyen (12) pour détecter la position réelle de l'élément, un moyen de comparaison (11) desdites positions désirées et réelles relié à des moyens de commande (13) de moyens d'actionnement (14) servant à déplacer ledit élément vers la position désirée, caractérisé en ce que, pour chaque élément à régler, le moyen de choix (10) comporte un ensemble de N potentiomètres (15, 16) dont les curseurs sont montés déplaçables par les utilisateurs, le nombre N étant choisi égal à un nombre prédéterminé d'utilisateurs de morphologie différente, ce nombre étant supérieur à 1, en ce que, pour chaque élément à régler, le moyen de mémorisation est constitué par l'ensemble correspondant de potentiomètres formant le moyen de choix dudit élément, en ce qu'il est prévu des moyens de sélection (17) pour relier le curseur d'un potentiomètre donné de chaque ensemble avec le moyen de comparaison associé au même élément que cet ensemble, chaque moyen de comparaison commandant les moyens d'actionnement de son élément associé en fonction du résultat de la comparaison entre les signaux de sortie du durseur et du moyen de détection de la position réelle associé avec le même élément.

2. Dispositif de réglage selon la revendication 1, caractérisé en ce que chacun desdits moyens de détection de la position réelle de chaque élément, est constitué par un potentiomètre (27) dont le curseur est monté déplaçable par ledit élément dont il y a lieu de régler la position.

3. Dispositif de réglage selon la revendication 2, caractérisé en ce que lesdits moyens de comparaison (11) sont constitués chacun par deux amplificateurs opérationnels (18, 22) dont les entrées sont reliées aux curseurs desdits potentiomètres de choix et de mémorisation (15, 16), et de détection (27) de la position réelle de l'élément, et dont les sorties sont reliées auxdits moyens de commande (13) des moyens d'actionnement (14) dudit élément.

4. Dispositif de réglage selon la revendication 3, caractérisé en ce que les moyens d'actionnement sont constitués par un moto-réducteur (28) à courant continu à double sens de rotation, entraînant le déplacement dudit élément du siège.

5. Dispositif de réglage selon la revendication 4, caractérisé en ce que lesdits moyens de commande sont constitués par deux relais d'alimentation (35, 38) dudit moto-réducteur (28) pour qu'il tourne dans un sens de rotation ou dans l'autre, afin d'entraîner le déplacement dudit élément dans un sens ou dans l'autre, vers la position de choix désirée, chacun desdits relais étant relié au collecteur d'un transistor (33, 34) dont la base est reliée à la sortie d'un desdits amplificateurs opérationnels (18, 22).

**Patentansprüche**

1. Vorrichtung zur Einstellung der Position wenigstens eines Teils der Elemente eines Sitzes, insbesondere eines Kraftfahrzeugsitzes, die für jedes einzustellende Element eine Einrichtung (10) zur Wahl der von einem Benutzer gewünschten Position, eine Einrichtung zur Speicherung der gewählten Position, eine Einrichtung (12) zum Abtasten der tatsächlichen Position des Elements und eine Einrichtung (11) zum Vergleich der gewünschten und der tatsächlichen Position besitzt, die mit Einrichtungen (13) zur Steuerung von Betätigungseinrichtungen (14) verbunden ist, die zur Bewegung dieses Elements in die gewünschte Position dienen, dadurch gekennzeichnet, daß die Wahleinrichtung (10) für jedes einzustellende Element eine Gruppe von N Potentiometern (15, 16) besitzt, deren Läufer durch die Benutzer bewegbar montiert sind, wobei die Anzahl N gleich einer vorbestimmten Anzahl von Benutzern mit unterschiedlichem Körperbau gewählt ist und größer als 1 ist, daß die Speichereinrichtung für jedes einzustellende Element aus der entsprechenden Gruppe von Potentiometern besteht, die die Wahleinrichtung dieses Elements bilden, und daß Selektionseinrichtungen (17) zur Verbindung des Läufers eines bestimmten Potentiometers jeder Gruppe mit der demselben Element wie diese Gruppe zugeordneten Wahleinrichtung vorgesehen ist, wobei jede Vergleichseinrichtung die Betätigungseinrichtungen des zugeordneten Elements in Abhängigkeit von dem Ergebnis des Vergleichs zwischen den Ausgangssignalen des Läufers und der demselben Element zugeordneten Einrichtung zum Abtasten der tatsächlichen Position steuert.

2. Einstellvorrichtung nach Anspruch 1, dadurch gekennzeichnet, daß jede der Einrichtungen zur Abtastung der tatsächlichen Position jedes Elements aus einem Potentiometer (27) besteht, dessen Läufer so montiert ist, daß er durch das Element, dessen Position einzustellen ist, bewegbar ist.

3. Einstellvorrichtung nach Anspruch 2, dadurch gekennzeichnet, daß die Vergleichseinrichtungen (11) jeweils aus zwei Operationsverstärkern (18, 22) bestehen, deren Eingänge mit den Läufern dieser

Potentiometer zur Wahl und zur Speicherung (15, 16) und zur Abtastung (27) der tatsächlichen Position des Elements und deren Ausgänge mit den Einrichtungen (13) zur Steuerung der Betätigungseinrichtungen (14) dieses Elements verbunden sind.

4. Einstellvorrichtung nach Anspruch 3, dadurch gekennzeichnet, daß die Betätigungseinrichtungen aus einem Gleichstrom-Getriebemotor (28) mit zwei Drehrichtungen bestehen, der das Element des Sitzes bewegt.

5. Einstellvorrichtung nach Anspruch 4, dadurch gekennzeichnet, daß die Steuereinrichtungen aus zwei Relais (35, 38) bestehen, die den Getriebemotor (28) so speisen, daß er in der einen oder der anderen Drehrichtung läuft, um das Element in der einen Richtung oder in der anderen Richtung auf die Position der gewünschten Wahl zu zu bewegen, wobei jedes Relais mit dem Kollektor eines Transistors (33, 34) verbunden ist, dessen Basis mit dem Ausgang eines der Operationsverstärker (18, 22) verbunden ist.

**Claims**

1. Device for adjusting the position of at least part of the elements of a seat, in particular of a motor vehicle, of the type comprising for each element to be adjusted, means (10) for adjusting the desired position by a user, means for memorising the chosen position, means (12) for detecting the actual position of the element, means (11) for comparing said desired and actual positions, connected to means (13) for controlling actuating means (14) serving to move said element into the desired position, characterised in that, for each element to be adjusted, the adjusting means (10) comprise an arrangement of N potentiometers (15, 16), whereof the slides are mounted to be movable by the users, the number N being chosen to be equal to a predetermined number of users having different morphologies, this number being greater than 1, in that, for each element to be adjusted, the memory means are constituted by the corresponding arrangement of potentiometers forming the means for adjusting said element, in that selection means (17) are provided for connecting the slide of a given potentiometer of each arrangement to the comparison means associated with the same element as this arrangement, each comparison means controlling the means for actuating its associated element as a function of the result of the comparison between the output signals of the slide and of the means for the detection of the actual position associated with the same element.

2. Adjusting device according to Claim 1, characterised in that each of the said means for detecting the actual position of each element, is constituted by a potentiometer (27) whereof the slide is mounted to be movable by the said element for which it is necessary to adjust the position.

3. Adjusting device according to Claim 2, characterised in that the said comparison means (11) are each constituted by two operational amplifiers (18, 22) whereof the inputs are connected to the slides of the said adjusting and memory potentiometers (15, 16) and detection potentiometers (27) for the actual position of the element, and whereof the outputs are connected to the said means (13) for controlling the means (14) for actuating said element.

4. Adjusting device according to Claim 3, characterised in that the actuating means are constituted by a d.c. motor-speed reducer (28) having two directions of rotation, causing the displacement of said seat element.

5. Adjusting device according to Claim 4, characterised in that the said control means are constituted by two supply relays (35, 38) for said motor-speed reducer (28) in order that it rotates in one direction of rotation or in the other in order to bring about the displacement of said element in one direction or the other, towards the desired position of adjustment, each of the said relays being connected to the collector of a transistor (33, 34) whereof the base is connected to the output of one of the said operational amplifiers (18, 22).

## FIG.1

## FIG.3

FIG.2

EP 0 233 421 B1